# EUROPEAN PATENT SPECIFICATION

(11) **EP 2 232 735 B1**
(45) Date of publication and mention of the grant of the patent: **23.10.2019**
(21) Application number: 08867334.8
(22) Date of filing: 17.12.2008
(51) Int. Cl.: H04B 7/26, H04L 12/66, H04W 36/14

(54) **METHOD AND APPARATUS FOR INTER-TECHNOLOGY HANDOFF OF A TERMINATING MOBILE STATION DURING AN ALERTING PROCEDURE**
VERFAHREN UND VORRICHTUNG ZUR INTERTECHNOLOGISCHEN WEITERGABE EINER ENDMOBILSTATION WÄHREND EINES ALARMIERUNGSVORGANGS
PROCÉDÉ ET APPAREIL POUR TRANSFERT INTER-TECHNOLOGIE D'UNE STATION MOBILE DE DESTINATION LORS D'UNE PROCÉDURE D'ALERTE

(30) Priority: 28.12.2007 IN DE27632007
(43) Date of publication of application: 29.09.2010
(73) Proprietor: Google Technology Holdings LLC, Mountain View, CA 94043 (US)
(72) Inventor: BHAT, Aravinda,, Swindon Wiltshire SN1 1EB (GB); GUPTA, Manisha,, Bangalore Karnataka 560037 (IN); JEELANI, Anjum,, Banglore Karnataka 560066 (IN); KRISHNA, Kiran Kumar,, Piscataway New Jersey 08854 (US); VENKATARAMAN, Shivakumar,, Bangalore Karnataka 560066 (IN)
(74) Representative: Openshaw & Co.
(86) International application number: PCT/US2008/087281
(87) International publication number: WO 2009/085874

(56) References cited:
- WO-A1-2004/107608
- WO-A1-2006/112561
- KR-A- 20000 046 567
- US-A- 5 940 762
- US-A1- 2006 256 752
- US-A1- 2007 201 441
- 3GPP2: "3GPP2 N.S0005-0, Version 1.0; Cellular Radiotelecommunications Intersystem Operations; pages 1, 2-57 to 2-60", INTERNET CITATION, July 1997 (1997-07), XP002379415, Retrieved from the Internet: URL:http:www.3gpp2.org/Public_html/specs/N .S0005-0_v1.0.pdf [retrieved on 2006-05-03]

## Description

### Field of the Invention

The present invention relates generally to wireless communication systems, and more specifically to handover of a mobile station between wireless communications networks implementing different air interface technologies.

### Background of the Invention

The evolution of wireless communications has resulted in a proliferation of networks of different technologies and corresponding different air interfaces. As a result, during the course of a single call, a wireless mobile station (MS) may roam among multiple wireless access networks, wherein each such access network implements a different technology than the other access networks of the multiple access networks, for example, a second generation (2G) cellular/circuit switched wireless access network, such as a GSM (Global System for Mobile communications) network or a Code Division Multiple Access (CDMA) providing primarily circuit voice service, and a packet data wireless access network, such as a Wireless Fidelity (Wi-Fi) network based on the IEEE 802.11 standards, providing packet switched Voice over Internet Protocol (VoIP) and other data related services.

As the MS roams among the packet data wireless access network and the circuit switched wireless access network, it may be beneficial to system performance to handoff the MS from the packet data access network to the circuit switched access network. For example, the channel conditions associated the latter may be more favorable than the channel conditions associated with the former due to such factors as fading, adjacent and co-channel interference, and available power at a serving base station (BS) or radio access network (RAN). A handoff of an MS from a packet data network to a circuit switched network is made additionally complex when the call involving the MS is currently anchored, and is desired to remain anchored, in an Internet Protocol Multimedia Subsystem (IMS). As is known in the art, IMS is supposed to be agnostic with respect to the underlying transport layer over which IMS data is conveyed.

One problem that arises in such a handoff is that a MS that is a target of a call may lose access to a packet data wireless access network while the call is being set up. For example, a Wi-Fi access point has such a limited coverage area that a Wi-Fi signal may deteriorate to an unacceptable level or may be lost altogether if a user is moving while a call is being set up. In such an instance, when the target, or terminating, MS attempts to handoff from the Wi-Fi network to a cellular network during the alerting process, that is, when the terminating MS has been notified of the call via the Wi-Fi network but loses the Wi-Fi signal before the user of the terminating MS answers the call, there is no prescribed way for the terminating MS to notify a serving network that the user has answered the call. As a result, the call will be dropped.

Therefore, a need exists for a method and apparatus for implementing a handoff of a call that is initiated in a terminating Wi-Fi network but is handed off to a terminating cellular network during an alerting procedure.

3GPP2: "3GPP2 N.S0005-0, Version 1.0; Cellular Radiotelecommunications Intersystem Operations; pages 1, 2-57 to 2-60", INTERNET CITATION, July 1997 (1997-07), discusses a "Successful Handoff-Forward of an Originating MS Awaiting Answer" and a "Successful Handoff-Forward of an Terminating MS While Alerting".

US 2006/256752 A1 discloses a Handoff (HO) Function that facilitates the handoff of a hybrid Access Terminal/Mobile Terminal (AT/MT) from a packet data wireless network to a circuit switched wireless network, while the AT/MT is engaged in a call with another party through an IMS network. The HO Function subscribes to dialogue events for the AT/MT, and is thus aware of all relative network parameters. When a handoff is required, the HO Function generates all signaling necessary to include into the IMS network user plane, a media gateway connected to the circuit switched MSC, and to redirect the other party to the media gateway. The HO Function then generates signaling to hand the AT/MT off to the circuit switched network, which then communicates through the MSC to the media gateway. The home network of the AT/MT need not be involved in, or even aware of, the handoff.

### Brief Description of the Drawings

FIG. 1 is a block diagram of a wireless communication system in accordance with various embodiments of the present invention.
FIG. 2 is a block diagram of a mobile station of FIG. 1 in accordance with an embodiment of the present invention.
FIG. 3 is a block diagram of a Mobility Manager/Voice Call Continuity server of FIG. 1 in accordance with an embodiment of the present invention.
FIG. 4A is a signal flow diagram of a method executed by the communication system of FIG. 1 in handing off a call from a terminating packet data network of FIG. 1 to a terminating circuit switched network of FIG. 1 in accordance with various embodiments of the present invention.
FIG. 4B is a continuation of the signal flow diagram of FIG. 4A depicting a method executed by the communication system of FIG. 1 in handing off a voice call from a terminating packet data network of FIG. 1 to a terminating circuit switched network of FIG. 1 in accordance with an embodiment of the present invention.
FIG. 4C is a continuation of the signal flow diagram of FIGs. 4A and 4B depicting a method executed by the communication system of FIG. 1 in handing off a voice call from a packet data network of FIG. 1 to a circuit switched network of FIG. 1 in accordance with an embodiment of the present invention.
FIG. 4D is a continuation of the signal flow diagram of FIGs. 4A, 4B, and 4C depicting a method executed by the communication system of FIG. 1 in handing off a voice call from a terminating packet data network of FIG. 1 to a terminating circuit switched network of FIG. 1 in accordance with an embodiment of the present invention.

### Detailed Description of the Invention

To address the need that exists for a method and apparatus that implements a handoff of a call that is initiated in a terminating Wi-Fi network but is handed off to a terminating cellular network during an alerting procedure, a communication system is provided that implements a handoff of a call that is to be anchored in an IMS network and is initiated via a terminating packet data network, such as a Wi-Fi network, but is handed off to a terminating cellular, or circuit switched, network during an alerting procedure. An originating mobile station initiates a call to a target, or terminating, mobile station via the terminating packet data network. Prior to the setup of the call, the terminating mobile station determines that a handoff to the terminating cellular network is desired. The terminating mobile station alerts a user of the terminating mobile station to the call and, while the call is answered and before completing the setup of the call, initiates a switching of the call from the terminating packet data network to the terminating cellular network. The call is then established with the terminating mobile station via the terminating cellular network. The invention is set out by the appended claims.

Generally, an example encompasses a method for an inter-technology handoff of a call from a terminating packet data network to a terminating circuit switched network during an alerting process. The method includes initiating a call to a terminating mobile station via a terminating packet data network, determining to handoff the call to a terminating circuit switched network before completing a set up of the call and while the call is answered, alerting a user of the terminating mobile station to the call, switching the call from the terminating packet data network to the terminating circuit switched network before completing the set up of the call, and establishing the call with the terminating mobile station via the terminating circuit switched network.

Another example encompasses an apparatus that provides for inter-technology handoff of services from a terminating packet data network to a terminating circuit switched network during an alerting process. The apparatus includes a network element that is configured to receive a first session invitation from an originating mobile station, convey a second session invitation to a terminating mobile station via a terminating packet data network, receive a request to set up the call via a terminating circuit switched network prior to the call being established and while the call is answered, and arrange for the call to be set up with the terminating mobile station via the terminating circuit switched network. In various embodiments of the invention, the network element may be a mobility manager or a Voice Call Continuity server.

Yet another example encompasses a mobile station capable of engaging in inter-technology handoff of a call from a terminating packet data network to a terminating circuit switched network during an alerting process, the mobile station configured to receive, via the terminating packet data network, a session invitation for the call, determine, prior to responding to the session invitation, that a handoff of the call is desirable, and in response to determining that a handoff is desirable, convey a request that the call be set up via the terminating circuit switched network.

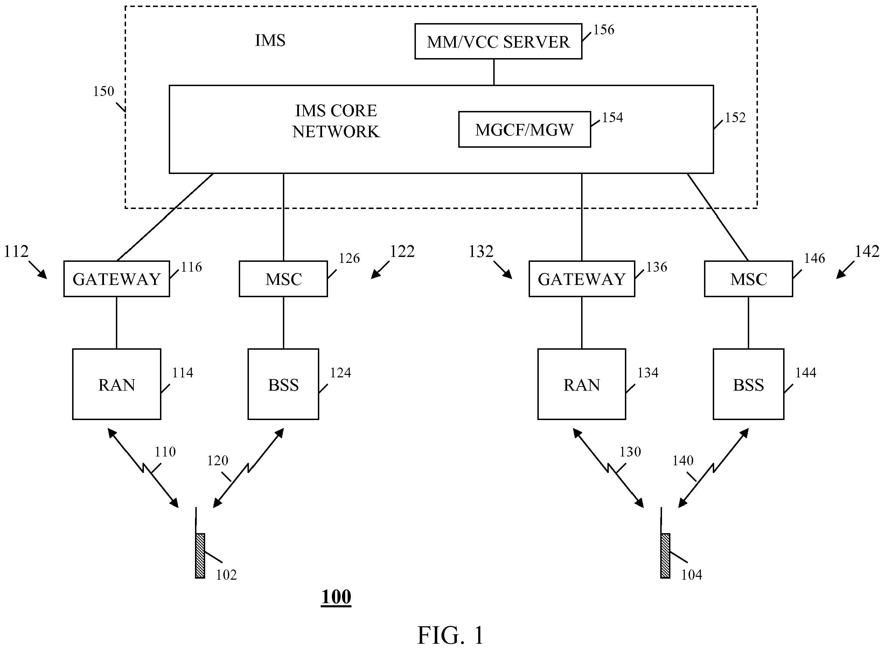

Turning now to the drawings, the present invention may be more fully described with reference to FIGs. 1-4D. FIG. 1 is a block diagram of a wireless communication system 100 in accordance with various embodiments of the present invention. Communication system 100 includes multiple mobile stations (MS) 102, 104 (two shown), for example but not limited to a cellular telephone, a radiotelephone, or a Personal Digital Assistant (PDA), personal computer (PC), or laptop computer equipped for wireless voice communications. In various radio technologies, a mobile station such as MSs 102 and 104 may be referred to as a user equipment (UE), a subscriber station (SS), an access terminal (AT), or the like.

Each MS 102, 104 is a dual mode device that is capable of engaging in a packet data voice call with a wireless packet data access network, such as wireless packet data access networks 112 and 132, and is further capable of engaging in a circuit switched voice call, also referred to herein as a cellular voice call, with a wireless circuit switched access network, such as wireless circuit switched access networks 122 and 142. More particularly, each MS 102, 104 is capable of communicating with a Radio Access Network (RAN), such as RANs 114 and 134, of a packet data access network, preferably via an IEEE (Institute of Electrical and Electronics Engineers) 802.11 protocol, that is, a Wi-Fi protocol, and with a Base Station Subsystem (BSS), such as BSSs 124 and 144, of a circuit switched access network, preferably via a legacy protocol such as a GSM (Global System for Mobile communications) or a CDMA (Code Division Multiple Access) protocol.

Each circuit switched network 122, 142 includes a respective Base Station Subsystem (BSS) 124, 144, which BSS is coupled to a respective Mobile Switching Center (MSC) 126, 146. Each of BSSs 124 and 144 includes a transceiver, for example, a Base Transceiver Station (BTS), operably coupled to a controller, for example, a Base Station Controller (BSC). Each of MSCs 126 and 146 includes call control and mobility management functionality and switching functionality. Packet data networks 112, 132 each includes a respective Radio Access Network (RAN) 114, 134 coupled to a respective gateway 116, 136. Each of RANs 114 and 134 includes a transceiver, such as an Access Point (AP) or a Node B, and may further include a controller, such as a Radio Network Controller (RNC). Gateways 116, 136 may comprise, by way of example, one or more of a Serving Gateway (Serving GWG) and a Public Data Network (PDN) Gateway.

Each of circuit switched networks 122 and 142 and packet data networks 112 and 132 is coupled to an IP Multimedia Subsystem (IMS) 150. MSC 146 of circuit switched network 142 is coupled to IMS 150, more particularly to a Media Gateway Control Function (MGCF)/Media Gateway (MGW) 154 of IMS 150 via a bearer interface, for example, a Pulse Code Modulation over Time Division Multiplexing (PCM over TDM) interface, and a signaling interface, for example, an ISDN User Part (ISUP) interface. In various embodiments of the present invention, MGCF/MGW 154 may be implemented in a same network entity or in separate network entities. Each of gateways 116, 136 also has a signaling and bearer connection with IMS 150 and, via IMS 150, with MGCF/MGW 154.

IMS 150 includes an IMS core network 152, comprising MGCF/MGW 154. MGCF/MGW 154 provides a gateway for each of circuit switched network 112 and packet data networks 132, 142 to IMS 150. As is known in the art, IMS core network 152 may comprise other network entities not shown herein, such as a Home Subscriber Server (HSS), and a Call Session Control Function (CSCF). IMS 150 further includes a Mobility Manager (MM)/Voice Call Continuity (VCC) server 156 that is accessible via IMS core network 152. In one embodiment of the invention, the functionality of the Mobility Manager (MM)/Voice Call Continuity (VCC) server 156 described herein may reside in a single entity, and in particular in an MM; however, in other embodiments of the present invention, the functionality of the MM/VCC server 156 described herein may reside in a VCC server or the MM/VCC server may be separate entities and the functionality of the MM/VCC server described herein may reside in either entity or may be distributed among them. When an MS, such as MSs 102 and 104, is engaged in a voice call with a circuit switched network, such as circuit switched networks 122 and 142, that is anchored in IMS 150, MGCF/MGW 154 may convert Pulse Code Modulation (PCM) signals received from MSC 146 to data packets, for example, based on a Real Time Protocol/User Datagram Protocol/Internet Protocol (RTP/UDP/IP) protocol suite, for routing in the IMS network and may convert voice data received from the IMS network to a PCM over TDM (Time Division Multiplex) format for routing to MSC 146. Although single interfaces are depicted in the drawings between many of the network elements of communication system 100, each interconnection among elements may comprise multiple interconnections and/or interfaces, such as one or more of a signaling interface, for example, an interface for an exchange of SIP, ISUP, MAP, or Megaco messages, and a bearer interface or path, such a path for an exchange of voice information. Each of RANs 114 and 134, gateways 116 and 136, BSSs 124 and 144, MSCs 124 and 144, MGCF/MGW 154, and MM/VCC server 156 is an element of a network and may be referred to herein as a network element of communication system 100.

Each of RANs 114 and 134 and BSSs 124 144 provides wireless communication services to mobile stations (MSs) located in a coverage area of the RAN or BSS via a respective air interface 110, 130, 120, 140. Each air interface 110, 120, 130, 140 includes a forward link that includes a pilot channel, at least one forward link traffic channel, and forward link common and dedicated signaling channels. Each air interface 110, 120, 130, 140 further includes a reverse link that includes at least one reverse link traffic channel, reverse link common and dedicated signaling channels, and an access channel.

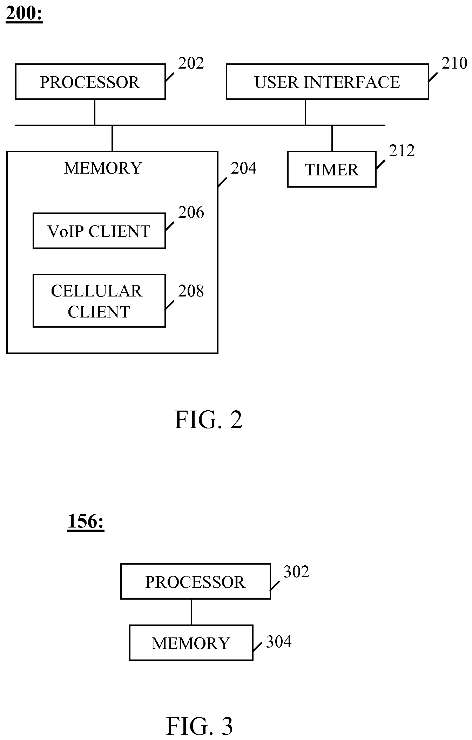

Referring now to FIG. 2, an architecture of an MS 200, such as MSs 102 and 104, is provided in accordance with an embodiment of the present invention. MS 200 includes a processor 202, such as one or more microprocessors, microcontrollers, digital signal processors (DSPs), combinations thereof or such other devices known to those having ordinary skill in the art, which processor is configured to execute the functions described herein as being executed by MS 200. MS 200 further includes an at least one memory device 204, such as random access memory (RAM), dynamic random access memory (DRAM), and/or read only memory (ROM) or equivalents thereof, that is coupled to the processor and that maintains data and programs that may be executed by the associated processor and that allows the UE to perform all functions necessary to operate in communication system 100. For example, at least one memory device 204 maintains a Voice over Internet Protocol (VoIP) client 206 comprising programs and data that facilitate engaging in a Internet Protocol (IP)-based call via a packet data network and a cellular client 208 comprising programs and data that facilitate engaging in a cellular call via a cellular, or circuit switched, network. At least one memory device 204 further maintains preprogrammed information that facilitates a switching between a packet data network, such as networks 112 and 132, and a circuit switched network, such as networks 122 and 142.

MS 200 further includes a user interface 210 that is coupled to processor 202. User interface 210 provides a user of the MS with the capability of interacting with the MS, including inputting instructions into the MS. In one embodiment of the present invention, user interface 210 includes a display screen and a keypad that includes multiple keys. In another embodiment of the present invention, user interface 206 may include a display screen that comprises a touch screen that is able to determine a position (i.e., an X-coordinate and a Y-coordinate) of a user's touch on the touch screen and convey the position data to processor 202. Based on the position data, processor 202 then translates the user's touch into an instruction. Preferably, the display screen may display a "keypad" screen that comprises multiple softkeys such softkeys corresponding to keys on a conventional telephone keypad and further including other instructional softkeys, such as to answer or reject a received call. MS 200 further includes a timer 212 that is coupled to processor 202 and that counts down a predetermined time period during which a user of the MS may input an instruction to proceed with a handoff.

Referring now to FIG. 3, an architecture of MM/VCC server 156 is provided in accordance with an embodiment of the present invention. MM/VCC server 156 includes a processor 302, such as one or more microprocessors, microcontrollers, digital signal processors (DSPs), combinations thereof or such other devices known to those having ordinary skill in the art, which processor is configured to execute the functions described herein as being executed by the MM/VCC server. MM/VCC server 156 further include an at least one memory device 304 that may comprise random access memory (RAM), dynamic random access memory (DRAM), and/or read only memory (ROM) or equivalents thereof, that maintain data and programs that may be executed by the associated processor and that allow the MM/VCC server to perform all functions necessary to operate in communication system 100. Preferably, MM/VCC server 156 is implemented by processor 302 based on programs and data maintained by at least one memory device 304. MM/VCC server 156 further includes a timer 306 coupled to processor 302 that counts down a predetermined time period during which the MM/VCC server waits for a response to a conveyed cancellation message.

The functionality described herein as being performed by MSs 102 and 104 and MM/VCC server 156 is implemented with or in software programs and instructions stored in the respective at least one memory device 204, 304 associated with the MS and MM/VCC server and executed by a processor 202, 302 associated with the MS and MM/VCC server. However, one of ordinary skill in the art realizes that the embodiments of the present invention alternatively may be implemented in hardware, for example, integrated circuits (ICs), application specific integrated circuits (ASICs), and the like, such as ASICs implemented in one or more of the MS and MM/VCC server. Based on the present disclosure, one skilled in the art will be readily capable of producing and implementing such software and/or hardware without undo experimentation.

In order for MSs 102 and 104 to engage in a circuit services voice call or a packet data voice call via packet data networks 112 and 132 and circuit switched networks 122 and 142, each of MSs 102 and 104, packet data networks 112 and 132, and circuit switched networks 122 and 142 operates in accordance with known wireless telecommunications protocols. Each of circuit switched networks 122 and 142 preferably is a legacy communication system that provides circuit switched communication services to subscribers serviced by the network (it may also provide packet data services) and that operates in accordance with the Global System for mobile communications (GSM) standards, Code Division Multiple Access (CDMA) standards, or later generations of the GSM or CDMA standards. Packet data networks 112 and 132, as illustrated herein, are IEEE (Institute of Electrical and Electronics Engineers) 802.11 (Wi-Fi) communication systems that provide packet data communication services to subscribers serviced by the networks. To ensure compatibility, radio system parameters and call processing procedures are specified by the standards, including call processing steps that are executed by an UE and a base station subsystem or other access network serving the UE and between the base station subsystem or other access network and associated infrastructure. However, those of ordinary skill in the art realize that each of packet data networks 112 and 132 may operate in accordance with any one of a variety of wireless packet data communication systems that supports packet data-based communication sessions, such as other IEEE (Institute of Electrical and Electronics Engineers) 802.xx standards, for example, the 802.15, or 802.16 or 802.20 standards, the 3GPP (Third Generation Partnership Project) standard or later generations of the 3GPP standard such as 3GPP LTE (Long Term Evolution), or the 3GPP2 standard or later generations of the 3GPP2 standard such as 3GPP2 UMB (Ultra Mobile Broadband). Furthermore, each of circuit switched networks 122 and 142 may operate in accordance with any one of a variety of well-known legacy wireless telecommunication systems that provide wireless circuit switched communication services.

In communication system 100, when an originating MS, such as MS 102, attempts to set up a voice call with a target, or terminating, MS, such as MS 104, the terminating MS may be roaming through the system. As a result of the roaming, situations may arise where the terminating MS has to be handed off during the alerting process, before call is set up is completed. For example and as is known in the art, while roaming in communication system 100 and being serviced by RAN 134, the signal received by MS 104 from RAN 134 may degrade to an unacceptable level or may be lost altogether. In such an event, MS 104 may desire to be serviced by circuit switched network 142, which may have a coverage area that is adjacent to, or that overlaps with, the coverage area of packet data network 142. For example, circuit switched network 142 may have a cellular coverage area that envelops, and expands well beyond, the coverage area of RAN 134 when the RAN is a Wi-Fi communication system.

In the prior art, when a terminating MS such as MS 104 attempts to handoff from a packet data system to a cellular system during call setup, the call will be dropped. In order to facilitate a handoff during call set up, communication system 100 provides a method and apparatus for a handoff of a terminating MS, that is, MS 104, from a packet data network to a circuit switched network during call set up. By providing for such a handoff of a call during call set up, communication system 100 prevents the call from being dropped, thereby conserving system resources, as a call setup process will not have to be re-initiated, and reducing user frustration with dropped calls.

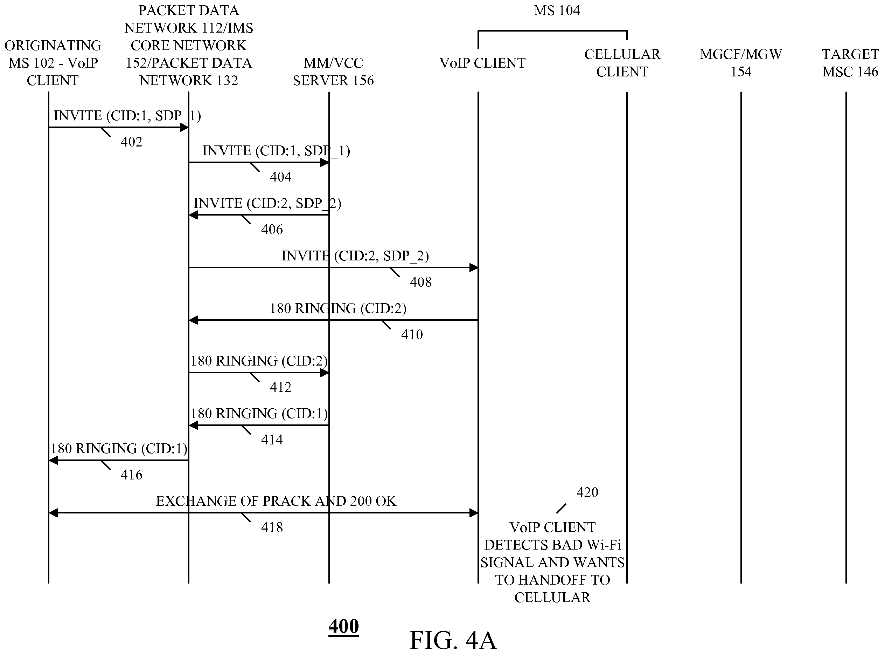

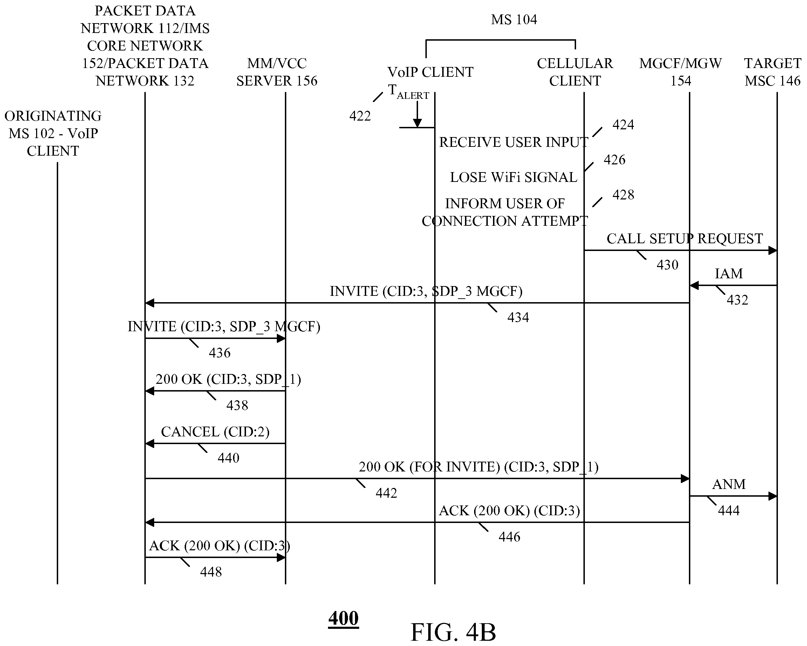

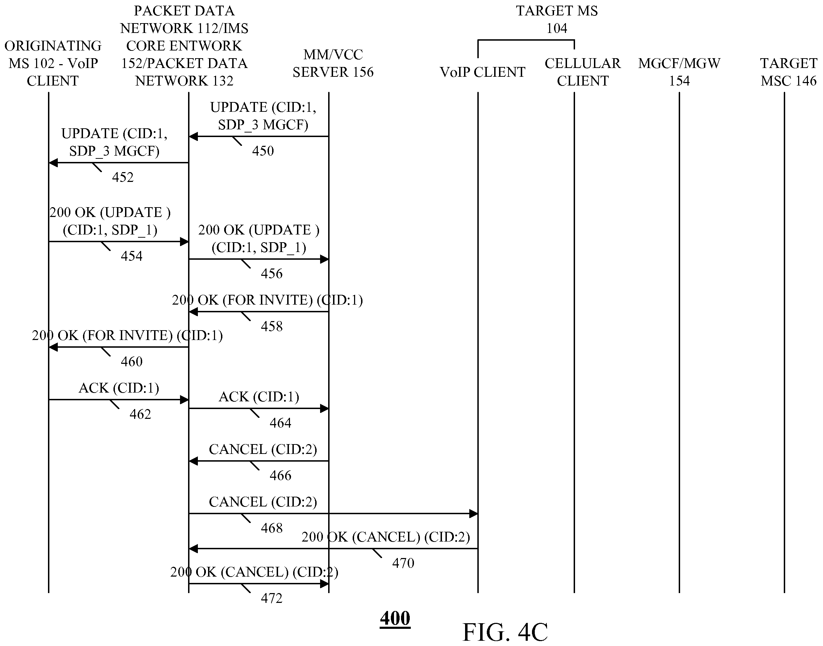

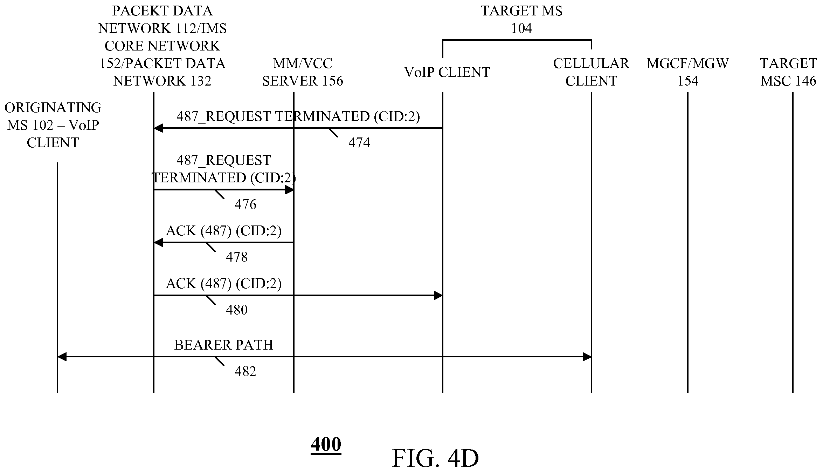

Referring now to FIGs. 4A-4D, a signal flow diagram 400 is provided that illustrates a method executed by communication system 100 in setting up a call between an originating MS and a terminating MS while the terminating MS is being handed off from a packet data network to a circuit switched network in accordance with an embodiment of the present invention. Signal flow diagram 400 begins when an originating MS, such as MS 102, attempts to set up an IMS telephony session with a target, or terminating, MS, such as MS 104. Preferably, VoIP client 206 of MS 102 attempts to set up the IMS telephony session via a packet data network serving the originating MS, that is, packet data network 112; however, one of ordinary skill in the art realizes that cellular client 208 of MS 102 may attempt to set up the IMS telephony session via a circuit switched network serving the originating MS, that is, circuit switched network 122. The telephony session will be controlled by IMS 150, and in particular will be anchored at MM/VCC server 156.

For purposes of illustrating the principles of the present invention, calling MS 102 and packet data network 112 may be referred to herein as an originating side of the call and of system 100 and called MS 104, packet data network 132, and circuit switched network 142 may be referred to herein as a terminating side of the call and of system 100. That is, MS 102 is an originating MS and packet data network 112 is an originating packet data network and MS 104 is a terminating MS, packet data network 132 is a terminating packet data network, and circuit switched network 142 is a terminating circuit switched network.

MS 102 initiates the call by conveying a session invitation, preferably a *Session Initiation Protocol (SIP) Invite*, to MS 104 via a packet data network serving the originating MS, that is, packet data network 112, and IMS network 150. More particularly, MS 102 conveys 402, 404 a first session invitation to MM/VCC server 156 via RAN 114, Gateway 116, and IMS core network 152, and in particular MGCF/MGW 154. The first session invitation identifies the calling party, that is, MS 102, and the called party, that is, MS 104. The first session invitation further includes a first connection identifier (CID:1) assigned to the call by MS 102 and a first session description protocol (SDP) proposal (SDP_1) of the MS. As is known in the art, the first CID identifies a Medium Access Layer (MAC) layer connection for the originating side, or leg, (MS 102 and network 112) of the communication session, or call, and the first SDP proposal identifies the parties to the session and identifies the originating MS's capabilities by proposing parameters for joining and participating in the session, for example, a session name and purpose, a type of media involved (video, audio, etc.), a format of the media, a transport protocol, and information needed to receive the media, such as addresses, ports, media formats, and the like.

In response to receiving the first session invitation, MM/VCC server 156 assigns a second connection identifier (CID:2) to a first terminating leg of the call, that is, a connection with terminating MS 104 via terminating packet data network 132, and conveys 406, 408 a second session invitation, preferably a second *SIP Invite*, to a VoIP client 206 of terminating MS 104 via IMS core network 152, and in particular MGCF/MGW 154, and a wireless packet data access network serving the terminating MS, that is packet data network 132. As is known in the art, the second session invitation also identifies both the calling party, that is, MS 102, and the called party, that is MS 104. The second session invitation further includes the second connection identifier (CID:2), which identifies a MAC layer connection for the first terminating leg of the call, and a second SDP proposal (SDP_2) for the call. The second SDP proposal includes parameters proposed by and supported by MM/VCC server 156, which may or may not be the same as the parameters proposed by MS 102.

In response to receiving the second session invitation, terminating MS 104 notifies a user of the terminating MS of the call. For example, MS 104 may play an audio alert signal and/or may display a message on a display screen of user interface 210 indicating that a call has been received. VoIP client 206 of MS 104 further notifies 408, 410, 412 MM/VCC server 156 that the MS has been successfully located and is being notified of the call, preferably by conveying a *SIP 180 Ringing* message, comprising CID:2, to the MM/VCC server via packet data network 132 and IMS core network 152. In response to receiving the *SIP 180 Ringing* message, MM/VCC server 156 then notifies 414, 416 originating MS 102 that terminating MS 104, has been located and is being notified of the call, again preferably by conveying a SIP *180 Ringing* message, comprising CID:1, to the originating MS via IMS core network 152 and packet data network 112. Originating MS 102 then acknowledges receipt of the *SIP 180 Ringing* message by conveying 418 a *SIP PRACK* message, and the terminating MS acknowledges 418 receipt of the *PRACK* message by conveying a *SIP 200 OK* message.

At some point during the call set up and prior to establishment of the call, for example, after the exchange of the *200 OK* and *PRACK* messages, terminating MS 104 realizes 420 that it is preferable that the call not continue via packet data network 132 and determines that it is desirable to hand off the call during call set up. For example, MS 104 may detect that a quality (for example, a signal strength, a signal-to-noise ratio (SNR), a carrier-to-interference ratio (C/I), pilot power-to-total power (Ec/Io) ratio, a bit error rate (BER), or a frame error rate (FER)) of a signal monitored by the MS and associated with RAN 134, such as a control signal, a beacon signal, or a pilot signal, has become unacceptable, or perhaps the MS loses the signal altogether. Further, MS 104 determines that the call should be handed off to a cellular network, that is, circuit switched network 142. For example, when a quality of a signal, such as a pilot signal, of circuit switched network 142, and more particularly of air interface 140, is measured by MS 104 when operating in packet data network 132 and exceeds an inter-system handoff threshold, or a quality of a previously reported pilot of packet data network 132, and more particularly of air interface 130, is measured by MS 104 when operating in packet data network 110 and falls below an intra-system handoff threshold, the MS may determine a need to handoff from packet data network 132 to circuit switched network 142.

In response to determining the need to handoff the call, and prior to responding to the received second session invitation, MS 104 waits for the user of the MS to input an instruction to continue with the call, that is, to answer call, or to drop, or reject, the call before initiating a handoff of the call. For example, the user of MS 104 may input an instruction by depressing or touching an 'Answer' key or a 'Reject' key in the user interface 210 of the MS. In order to limit the waiting period, MS 104 may start 422 timer 212, T_{ALERT}, that counts down a predefined waiting period maintained in an at least one memory device 204 of the MS. In the event that the timer expires before MS 104 receives an instruction from the user to answer or reject the call, or the user of MS 104 instructs the MS to reject the call, MS 104 ceases alerting the user and cleans up the call. In the event that the user of MS 104 inputs 424 an instruction to answer the call (prior to the expiration of the timer), and the MS determines 426 that the packet data network signal is unacceptable or has been lost, the MS 104 proceeds with the handoff by initiating a handoff to circuit switched network 142. Further, in order to keep the user of the terminating MS from terminating the call while the handoff is being effected, terminating MS 104 may notify 428 the user that a connection is being attempted, for example, by displaying "Connecting ..." or "Connection in Progress" on the display screen of the user interface 210 of the MS. The notification that a connection is being attempted may continue to be displayed until the terminating cellular, or circuit switched, leg of the call is connected.

While the call is answered, communication system 100 switches the call from terminating packet data network 132 to terminating circuit switched network 142. More particularly, the cellular client 208 of terminating MS 104 accesses, and is acquired by, BSS 144 and circuit switched network 142. Preferably, MS 104 accesses circuit switched network 142 by conveying a circuit switched network-based call setup request, such as a call origination message, to circuit switched network 142, and in particular to terminating MSC 146, via air interface 140 and BSS 144. As is known in the art, the call setup request identifies both MS 102 and MS 104.

In response to receiving the call set up request, terminating BSS 144 allocates resources to terminating MS 104. The terminating MSC 146 obtains, from MGCF/MGW 154, a handover number and reserves, from the MGCF/MGW, trunk circuits for the handoff of the call to circuit switched network 142, preferably by conveying 432 an *ISDN User Part (ISUP) IAM* (Initial Address Message) to, and receiving 444 an *ISUP ACM* (Address Complete Message) message from, the MGCF/MGW. In response to receiving 432 the *ISUP IAM* message, MGCF/MGW 154 further assigns a new, third CID (CID:3) to a second terminating leg of the call, that is, a connection with terminating MS 104 via terminating circuit switched network 142, and generates a new, third SDP proposal (SDP_3) for the terminating side of the call, which CID and SDP proposal are associated with a circuit switched call, that is, with circuit switched network 142, on the terminating side of the call. MGCF/MGW 154 then conveys 434, 436 CID:3 and SDP_3 to MM/VCC server 156, preferably in a third session invitation, preferably a third *SIP Invite* message.

In response to receiving the third session invitation, MM/VCC server 156 arranges for the or the call to be set up with terminating MS 104 via terminating circuit switched network 142 instead of terminating packet data network 132. MM/VCC server 156 acknowledges 436, 442, to MGCF/MGW 154, receipt of the session invitation, preferably by conveying a *SIP 200 OK* message to the MGCF/MGW. The *200 OK* message identifies the call by including the third CID (CID:3) and further includes the first set of SDP parameters (SDP_1) received from originating side of the call (that is, MS 102 and the access network serving the MS, that is packet data network 112). Further, MM/VCC server 156 cancels the connection (CID:2) associated with a packet data call on the terminating side of the call and informs terminating MS 104 of the canceled connection, preferably by conveying a SIP *Cancel* message, identifying CID:2, to the MS via IMS core network 152 and circuit switched network 142.

In response to receiving the acknowledgement of the third session invitation from MM/VCC server 156, MGCF/MGW 154 links the originating side of the call to the terminating side of the call and provides the handover number and an acknowledgement that trunk circuits have been reserved for the handoff of the call by conveying 444 the *ISUP ANM* message to terminating MS 104. Further, in response to receiving the acknowledgement of the third session invitation, MGCF/MGW 154 acknowledges 446, 448 receiving the third session invitation acknowledgement by conveying, to the MM/VCC server, a *SIP 200 OK* message, which *SIP 200 OK* message identifies the third connection (CID:3).

In response to receiving, from MGCF/MGW 154, the acknowledgement of the third session invitation acknowledgement, and based on the first session invitation received from originating MS 102 and the third session invitation received from the MGCF/MGW, MM/VCC server 156 informs the originating MS of the new SDP proposal, that is, SDP_3, which are the parameters associated with a circuit switched call on the terminating side of the call. Preferably, MM/VCC server 156 so informs MS 102 by conveying 450, 452 a *SIP Update* message to the MS via IMS core network 152 and packet data network 112. The *SIP Update* message identifies the call to MS 102 by including the connection identifier (CID:1) provided by MS 102, and further includes the SDP proposal of MGCF/MGW 154, that is, SDP_3. In response to receiving the SDP_3 proposal of MGCF/MGW 154, MS 102 acknowledges 454, 456 receipt of the proposal by conveying a *SIP 200 OK* message to the MM/VCC server. The *SIP 200 OK* message identifies the update message, identifies the call by including the first connection identifier (CID:1), and again conveys an SDP proposal of the originating MS, for example, by resending the first SDP proposal SDP_1.

At this point, the call is being set up on the circuit switched network serving the terminating MS 104 and circuit switched parameters associated with the terminating side of the call have been conveyed to originating MS 102. In response to receiving 456 the acknowledgement of receipt of the SDP_3 proposal from originating MS 102 and again receiving an SDP proposal from the originating MS, MM/VCC server 156 now acknowledges 458, 460 the first session invitation received from originating MS 102 when the MS initiated the call. Preferably, MM/VCC server 156 acknowledges the first session invitation by conveying a *SIP 200 OK* message to MS 102, which *SIP 200 OK* message identifies the first session invitation and further identifies the call by including the first connection identifier (CID:1). In response to receiving the acknowledgement of the first session invitation, MS 102 then acknowledges 462, 464 receipt of the acknowledgement by conveying a *SIP ACK* to MM/VCC server 156 via packet data network 112 and IMS core network 152, which *SIP ACK* also identifies the call by including the first connection identifier (CID:1).

Since the call is now going to be set up via circuit switched network 142 on the terminating side of the call, the connection identifier associated with packet data network 132 on the terminating side of the call, that is CID:2, may now be canceled and the first terminating leg of the call may be terminated. Accordingly, in response to receiving 462 the *SIP ACK* from MS 102, MM/VCC server 156 informs 466, 468 terminating MS of the cancellation by conveying a cancellation message, preferably a *SIP Cancel* message, to terminating MS 104, and in particular to the VoIP client 206 of the terminating MS, via packet data network 132156. The *SIP Cancel* message identifies the connection being canceled, that is, CID:2.

When MM/VCC server 156 does not receive a response to the cancellation message prior to an expiration of a predetermined response waiting period, which waiting period is determined based on response timers built into the SIP protocol, for example, when terminating MS 104 has completely lost its connection with packet data network 132, then the MM/VCC server terminates the first terminating leg of the call, that is the leg associated with CID:2 and that encompasses packet data network 132. Similarly, when terminating MS 104 determines that it has completely lost its connection with packet data network 132, the terminating MS locally cleans up the leg of the call encompassing packet data network 132. A bearer path is then established between MS 102 and MS 104 via packet data network 112 and the second terminating leg of the call, that is, via circuit switched network 142, in accordance with well known techniques

When terminating MS 104 has maintained some connection to packet data network 132 and receives the cancellation message via the packet data network prior to the expiration of the response waiting period, then in response to receiving the message, terminating MS 104 acknowledges the receipt by conveying 470, 472 an acknowledgement, preferably a *SIP 200 OK* message, to MM/VCC server 156 via packet data network 132, which message identifies the cancellation message and the connection identifier (CID:2) that has been canceled. A bearer path is then established between MS 102 and MS 104 via packet data network 112 and the second terminating leg of the call, that is, via circuit switched network 142, in accordance with well known techniques and communication system 100 terminates the first terminating leg of the call. In order to terminate the first terminating leg of the call, terminating MS 104, and in particular to the VoIP client 206 of the terminating MS, hangs up on the packet data call on the terminating side of the call, preferably by conveying 474, 476 a *SIP 487 Request Terminated* message to MM/VCC server 156 via packet data network 132. MM/VCC server 156 then acknowledges being informed that terminating MS 104 is hanging up on the packet data call by conveying a *SIP ACK* back to MS 104, which *SIP ACK* identifies the hang up message and further identifies the packet data call being hung up on by including the second connection identifier (CID:2). Terminating MS 104 and MM/VCC server 156 then terminate the first terminating leg of the call in accordance with well known techniques and signal flow diagram 400 ends.

By providing for a terminating MS to be handed off from a packet data network to a cellular network during an alerting procedure, that is, while a call is answered and before completing s setup of the call, a call initiated by an originating mobile station and anchored in an IMS network need not be dropped when service to the terminating mobile station in the packet data network deteriorates to an unacceptable level. By avoiding a dropping of the call, the communication system reduces user frustration and preserves system resources, as the originating mobile station is no longer required to re-initiate the call.

While the present invention has been particularly shown and described with reference to particular embodiments thereof, it will be understood by those skilled in the art that various changes may be made and equivalents substituted for elements thereof without departing from the scope of the invention as set forth in the claims below. Accordingly, the specification and figures are to be regarded in an illustrative rather then a restrictive sense, and all such changes and substitutions are intended to be included within the scope of the present invention.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any variation thereof, are intended to cover a non-exclusive inclusion, such that a process, method, article, or apparatus that comprises a list of elements does not include only those elements but may include other elements not expressly listed or inherent to such process, method, article, or apparatus. The terms 'including' and/or 'having', as used herein, are defined as comprising. Furthermore, unless otherwise indicated herein, the use of relational terms, if any, such as first and second, top and bottom, and the like are used solely to distinguish one entity or action from another entity or action without necessarily requiring or implying any actual such relationship or order between such entities or actions. An element preceded by "... a" does not, without more constraints, preclude the existence of additional identical elements in the process, method, article, or apparatus.

## Claims

1. A method for inter-technology handoff of a call from a terminating packet data network (132) to a terminating circuit switched network (142), the method comprising:
receiving, by a terminating mobile station (104), via a terminating packet data network (132), a session invitation for a call;
determining, by the terminating mobile station (104), prior to responding to the session invitation, that a handoff of the call is desirable;
receiving, by the terminating mobile station (104), a user instruction to answer the call; and
responsive to determining that the handoff of the call is desirable and receiving the user instruction to answer the call, conveying, by the terminating mobile station (104), a request that the call be set up via the terminating circuit switched network (142).

2. The method of claim 1, further comrpsing:
receiving, by a network element (150), a first session invitation from an originating mobile station (102);
conveying, by the network element (150), the session invitation to the terminating mobile station (104) via the terminating packet data network (132);
receiving, by the network element (150), the request from the terminating mobile station (104), and
in response to receiving the request, arranging, by the network element (150), for the call to be set up with the terminating mobile station (104) via the terminating circuit switched network (142).

3. The method of claim 2, wherein:
the first session invitation comprises a first connection identifier (CID:1) associated with the originating mobile station (102);
the method further comprises assigning, by the network element (150), a second connection identifier (CID:2) to a connection with the terminating mobile station (104) via the terminating packet data network (132); and
the network element (150) arranges for the call to be set up with the terminating mobile station (104) via the terminating circuit switched network (142) by canceling the second connection identifier (CID:2) after a third connection identifier (CID:3) is assigned, by the network element (150), to a connection with the terminating mobile station (104) via the terminating circuit switched network (142).

4. The method of claim 2, wherein:
the method further comprises receiving, by the network element (150), a first session description protocol proposal (SDP_1) associated with an originating mobile station (102) and conveying, by the network element (150), a second session description protocol proposal (SDP_2) to the terminating mobile station (104) via the terminating packet data network (132), and
the network element (150) arranges for the call to be set up with the terminating mobile station (104) via the terminating circuit switched network (142) by receiving a third session description protocol proposal associated with the terminating circuit switched network (142).

5. The method of claim 1, futher comprising alerting, by the terminating mobile station (104), a user of the terminating mobile station (104) to the call, wherein alerting comprises notifying the user of the terminating mobile station (104) that a connection is being established while the call is being switched from the terminating packet data network (132) to the terminating circuit switched network (142).

6. The method of claim 1, further comprising:
in response to determining that a handoff is desirable, starting a timer (212) by the terminating mobile station (104); and
determining, by the terminating mobile station (104), to handoff,
wherein the request is conveyed only if the terminating mobile station (104) receives the user instruction prior to an expiration of the timer (212).

7. The method of claim 1, further comprising:
conveying, by the network element (150), a cancellation message to the terminating mobile station (104) to cancel a leg of the call encompassing the terminating packet data network (132); and
in response to a failure to receive by the network element (150) a response to the cancellation message prior to an expiration of a response waiting period, terminating, by the network element (150), the leg.

8. A mobile station (104) capable of engaging in inter-technology handoff of a call from a terminating packet data network (132) to a terminating circuit switched network (142), the mobile station (104) configured to receive, via the terminating packet data network (132), a session invitation for the call, determine, prior to responding to the session invitation, that a handoff of the call is desirable, and in response to determining that a handoff is desirable and receiving a user instruction to answer the call, to then convey a request that the call be set up via the terminating circuit switched network (142).

9. The mobile station of claim 8, wherein the mobile station (104) is configured to alert a user of the terminating mobile station (104) to the call prior to requesting that the call be set up via the terminating circuit switched network (142).

10. The mobile station of claim 8, wherein the mobile station (104) is configured to alert a user of the terminating mobile station (104) to the call by notifying the user of the terminating mobile station (104) that a connection is being established while the call is being switched from the terminating packet data network (132) to the terminating circuit switched network (142).

11. The mobile station of claim 8, wherein the mobile station (104) is configured to start a timer (212) in response to determining that a handoff is desirable, and to then convey the request that the call be set up via the terminating circuit switched network only if the mobile station (104) receives the user instruction prior to expiration of the timer (212).

12. A system comprising:
the mobile station according to claim 8; and
a network element (150) that is configured to receive a first session invitation from an originating mobile station (102), convey a second session invitation to the mobile station (104) via a terminating packet data network (132), receive a request from the mobile station (104) to set up the call via a terminating circuit switched network (142) prior to the call being established, and then arrange for the call to be set up with the mobile station (104) via the terminating circuit switched network (142).

13. The system of claim 12, wherein the first session invitation comprises a first connection identifier (CID:1) associated with the originating mobile station (102), wherein the second session invitation includes a second connection identifier (CID:2) associated with a connection with the mobile station (104) via the terminating packet data network (132), and wherein the network element (150) is configured to arrange for the call to be set up with the mobile station (104) via the terminating circuit switched network (142) by canceling the second connection identifier (CID:2) after a third connection identifier (CID:3) is assigned to a connection with the mobile station (104) via the terminating circuit switched network (142).

14. The system of claim 12, wherein the first session invitation comprises a first session description protocol proposal (SDP_1) associated with an originating mobile station (102), wherein the second session invitation comprises a second session description protocol proposal (SDP_2) to the mobile station (104) via the terminating packet data network (132), and wherein the network element (150) is configured to arrange for the call to be set up with the mobile station (104) via the terminating circuit switched network (142) by receiving a third session description protocol proposal (SDP_3) associated with the terminating circuit switched network (142).

15. The system of claim 12, wherein the network element (150) is one or more of a mobility manager and Voice Call Continuity server (156).

16. The system of claim 12, wherein the network element (150) is configured to convey a cancellation message to cancel a leg of the call encompassing the terminating packet data network (132) and, in response to a failure to receive a response to the cancellation message prior to an expiration of a response waiting period, terminate the leg.

## Patentansprüche

1. Verfahren zur technologieübergreifenden Übergabe eines Anrufs von einem terminierenden Paketdatennetzwerk (132) an ein terminierendes leitungsvermitteltes Netzwerk (142), das Verfahren umfassend:
Empfangen, durch eine terminierende Mobilstation (104) über ein terminierendes Paketdatennetzwerk (132), einer Sitzungseinladung für einen Anruf;
Ermitteln, durch die terminierende Mobilstation (104), vor einem Antworten auf die Sitzungseinladung, dass eine Übergabe des Anrufs wünschenswert ist;
Empfangen, durch die terminierende Mobilstation (104), einer Benutzeranweisung zur Entgegennahme des Anrufs; und
in Reaktion auf das Ermitteln, dass die Übergabe des Anrufs wünschenswert ist, und das Empfangen der Benutzeranweisung zur Entgegennahme des Anrufs, Übermitteln, durch die terminierende Mobilstation (104), einer Anforderung, dass der Anruf über das terminierende leitungsvermittelte Netzwerk (142) aufgebaut werden soll.

2. Verfahren nach Anspruch 1, ferner umfassend:
Empfangen, durch ein Netzwerkelement (150), einer ersten Sitzungseinladung von einer Ursprungsmobilstation (102);
Übermitteln, durch das Netzwerkelement (150), der Sitzungseinladung über das terminierende Paketdatennetzwerk (132) an die terminierende Mobilstation (104);
Empfangen, durch das Netzwerkelement (150), der Anforderung von der terminierenden Mobilstation (104), und
in Reaktion auf das Empfangen der Anforderung, Veranlassen, durch das Netzwerkelement (150), dass der Anruf mit der terminierenden Mobilstation (104) über das terminierende leitungsvermittelte Netzwerk (142) aufgebaut wird.

3. Verfahren nach Anspruch 2, wobei:
die erste Sitzungseinladung eine erste Verbindungskennung (CID:1) umfasst, die mit der Ursprungsmobilstation (102) assoziiert ist;
das Verfahren ferner ein Zuweisen, durch das Netzwerkelement (150), einer zweiten Verbindungskennung (CID:2) zu einer Verbindung mit der terminierenden Mobilstation (104) über das terminierende Paketdatennetzwerk (132) umfasst; und
das Netzwerkelement (150) veranlasst, dass der Anruf mit der terminierenden Mobilstation (104) über das terminierende leitungsvermittelte Netzwerk (142) aufgebaut wird, durch Annullieren der zweiten Verbindungskennung (CID:2), nachdem eine dritte Verbindungskennung (CID:3) durch das Netzwerkelement (150) einer Verbindung mit der terminierenden Mobilstation (104) über das terminierende leitungsvermittelte Netzwerk (142) zugewiesen ist.

4. Verfahren nach Anspruch 2, wobei:
das Verfahren ferner ein Empfangen, durch das erste Netzwerkelement (150), eines ersten Session-Description-Protocol-Vorschlags (SDP_1), der mit einer Ursprungsmobilstation (102) assoziiert ist, und ein Übermitteln, durch das Netzwerkelement (150), eines zweiten Session-Description-Protocol-Vorschlags (SDP_2) über das terminierende Paketdatennetzwerk (132) an die terminierende Mobilstation (104) umfasst, und
das Netzwerkelement (150) veranlasst, dass der Anruf mit der terminierenden Mobilstation (104) über das terminierende leitungsvermittelte Netzwerk (142) aufgebaut wird, durch Empfangen eines dritten Session-Description-Protocol-Vorschlags, der mit dem terminierenden leitungsvermittelten Netzwerk (142) assoziiert ist.

5. Verfahren nach Anspruch 1, ferner umfassend ein Hinweisen, durch die terminierende Mobilstation (104), eines Benutzers der terminierenden Mobilstation (104) auf den Anruf, wobei das Hinweisen ein Benachrichtigen des Benutzers der terminierenden Mobilstation (104) darüber, dass eine Verbindung aufgebaut wird, während der Anruf von dem terminierenden Paketdatennetzwerk (132) auf das terminierende leitungsvermittelte Netzwerk (142) umgeschaltet wird, umfasst.

6. Verfahren nach Anspruch 1, ferner umfassend:
in Reaktion auf das Ermitteln, dass eine Übergabe wünschenswert ist, Starten eines Zeitgebers (212) durch die terminierende Mobilstation (104); und
Ermitteln, durch die terminierende Mobilstation (104), dass eine Übergabe erfolgen soll,
wobei die Anforderung nur dann übermittelt wird, wenn die terminierende Mobilstation (104) die Benutzeranweisung vor Ablauf des Zeitgebers (212) empfängt.

7. Verfahren nach Anspruch 1, ferner umfassend:
Übermitteln, durch das Netzwerkelement (150), einer Annullierungsnachricht an die terminierende Mobilstation (104), um einen Zweig des Anrufs, der das terminierende Paketdatennetzwerk (132) umfasst, zu annullieren; und
in Reaktion auf ein Nichtempfangen, durch das Netzwerkelement (150), einer Antwort auf die Annullierungsnachricht vor Ablauf einer Antwortwartezeit, Terminieren, durch das Netzwerkelement (150), des Zweigs.

8. Mobilstation (104), die in der Lage ist, sich an einer technologieübergreifenden Übergabe eines Anrufs von einem terminierenden Paketdatennetzwerk (132) an ein terminierendes leitungsvermitteltes Netzwerk (142) zu beteiligen, wobei die Mobilstation (104) konfiguriert ist, eine Sitzungseinladung für den Anruf über das terminierende Paketdatennetzwerk (132) zu empfangen, vor einem Beantworten der Sitzungseinladung zu ermitteln, dass eine Übergabe des Anrufs wünschenswert ist, und, in Reaktion auf das Ermitteln, dass eine Übergabe wünschenswert ist, und ein Empfangen einer Benutzeranweisung zur Entgegennahme des Anrufs, im Anschluss eine Anforderung, dass der Anruf über das terminierende leitungsvermittelte Netzwerk (142) aufgebaut werden soll, zu übermitteln.

9. Mobilstation nach Anspruch 8, wobei die Mobilstation (104) konfiguriert ist, einen Benutzer der terminierenden Mobilstation (104) vor Anfordern, dass der Anruf über das terminierende leitungsvermittelte Netzwerk (142) aufgebaut werden soll, auf den Anruf hinzuweisen.

10. Mobilstation nach Anspruch 8, wobei die Mobilstation (104) konfiguriert ist, einen Benutzer der terminierenden Mobilstation (104), durch Benachrichtigen des Benutzers der terminierenden Mobilstation (104) darüber, dass eine Verbindung aufgebaut wird, während der Anruf von dem terminierenden Paketdatennetzwerk (132) auf das terminierende leitungsvermittelte Netzwerk (142) umgeschaltet wird, auf den Anruf hinzuweisen.

11. Mobilstation nach Anspruch 8, wobei die Mobilstation (104) konfiguriert ist, in Reaktion auf das Ermitteln, dass eine Übergabe wünschenswert ist, einen Zeitgeber (212) zu starten und im Anschluss die Anforderung, dass der Anruf über das terminierende leitungsvermittelte Netzwerk aufgebaut werden soll, nur dann zu übermitteln, wenn die Mobilstation (104) die Benutzeranweisung vor Ablauf des Zeitgebers (212) empfängt.

12. System, umfassend:
die Mobilstation nach Anspruch 8; und
ein Netzwerkelement (150), das konfiguriert ist, eine erste Sitzungseinladung von einer Ursprungsmobilstation (102) zu empfangen, eine zweite Sitzungseinladung über ein terminierendes Paketdatennetzwerk (132) an die Mobilstation (104) zu übermitteln, eine Anforderung von der Mobilstation (104), den Anruf über ein terminierendes leitungsvermitteltes Netzwerk (142) aufzubauen, zu empfangen, bevor der Anruf aufgebaut wird, und im Anschluss zu veranlassen, dass der Anruf mit der Mobilstation (104) über das terminierende leitungsvermittelte Netzwerk (142) aufgebaut wird.

13. System nach Anspruch 12, wobei die erste Sitzungseinladung eine erste Verbindungskennung (CID:1) umfasst, die mit der Ursprungsmobilstation (102) assoziiert ist, wobei die zweite Sitzungseinladung eine zweite Verbindungskennung (CID:2) beinhaltet, die mit einer Verbindung mit der Mobilstation (104) über das terminierende Paketdatennetzwerk (132) assoziiert ist, und wobei das Netzwerkelement (150) konfiguriert ist, zu veranlassen, dass der Anruf mit der Mobilstation (104) über das terminierende leitungsvermittelte Netzwerk (142) aufgebaut wird, durch Annullieren der zweiten Verbindungskennung (CID:2), nachdem eine dritte Verbindungskennung (CID:3) einer Verbindung mit der Mobilstation (104) über das terminierende leitungsvermittelte Netzwerk (142) zugewiesen ist.

14. System nach Anspruch 12, wobei die erste Sitzungseinladung einen ersten Session-Description-Protocol-Vorschlag (SDP_1) umfasst, der mit einer Ursprungsmobilstation (102) assoziiert ist, wobei die zweite Sitzungseinladung einen zweiten Session-Description-Protocol-Vorschlag (SDP_2) an die Mobilstation (104) über das terminierende Paketdatennetzwerk (132) umfasst, und wobei das Netzwerkelement (150) konfiguriert ist, zu veranlassen, dass der Anruf mit der Mobilstation (104) über das terminierende leitungsvermittelte Netzwerk (142) aufgebaut wird, durch Empfangen eines dritten Session-Description-Protocol-Vorschlags (SDP_3), der mit dem terminierenden leitungsvermittelten Netzwerk (142) assoziiert ist.

15. System nach Anspruch 12, wobei es sich bei dem Netzwerkelement (150) um einen oder mehrere von einem Mobilitätsmanager und einem Sprachanrufkontinuitätsserver (156) handelt.

16. System nach Anspruch 12, wobei das Netzwerkelement (150) konfiguriert ist, eine Annullierungsnachricht zu übermitteln, um einen Zweig des Anrufs, der das terminierende Paketdatennetzwerk (132) umfasst, zu annullieren und den Zweig, in Reaktion auf ein Nichtempfangen einer Antwort auf die Abbruchnachricht vor Ablauf einer Antwortwartezeit, zu terminieren.

## Revendications

1. Procédé pour le transfert inter-technologie d'un appel d'un réseau de données de paquets de terminaison (132) vers un réseau commuté de circuit de terminaison (142), le procédé comprenant :
la réception, par une station mobile de terminaison (104), via un réseau de données de paquets de terminaison (132), d'une invitation de session pour un appel ;
la détermination, par la station mobile de terminaison (104), avant de répondre à l'invitation de session, qu'un transfert de l'appel est souhaitable ;
la réception, par la station mobile de terminaison (104), d'une instruction utilisateur pour répondre à l'appel ; et
en réponse à la détermination que le transfert de l'appel est souhaitable et la réception de l'instruction utilisateur de répondre à l'appel, le transport, par la station mobile de terminaison (104), d'une demande que l'appel soit configuré via le réseau commuté de circuit de terminaison (142).

2. Procédé selon la revendication 1, comprenant en outre :
la réception, par un élément de réseau (150), d'une première invitation de session à partir d'une station mobile d'origine (102) ;
la transmission, par l'élément réseau (150), de l'invitation de session à la station mobile de terminaison (104) via le réseau de données de paquets de terminaison (132) ;
la réception, par l'élément réseau (150), de la demande de la station mobile de terminaison (104), et
en réponse à la réception de la demande, l'organisation, par l'élément réseau (150), de l'installation de l'appel avec la station mobile de terminaison (104) via le réseau commuté de circuit de terminaison (142).

3. Procédé selon la revendication 2, dans lequel :
la première invitation de session comprend un premier identifiant de connexion (CID:1) associé à la station mobile d'origine (102) ;
le procédé comprend en outre l'attribution, par l'élément réseau (150), d'un deuxième identifiant de connexion (CID:2) à une connexion avec la station mobile de terminaison (104) via le réseau de données de paquets de terminaison (132) ; et
l'élément réseau (150) s'organise pour que l'appel soit configuré avec la station mobile de terminaison (104) via le réseau commuté de circuit de terminaison (142) en annulant le deuxième identifiant de connexion (CID:2) après l'attribution d'un troisième identifiant de connexion (CID:3), par l'élément du réseau (150), à une connexion avec la station mobile de terminaison (104) via le réseau commuté de circuit de terminaison (142).

4. Procédé selon la revendication 2, dans lequel :
le procédé comprend en outre la réception, par l'élément réseau (150), d'une première proposition de protocole de description de session (SDP_1) associée à une station mobile d'origine (102) et à la transmission, par l'élément réseau (150), d'une deuxième proposition de protocole de description de session (SDP_2) à la station mobile de terminaison (104) via le réseau de données de paquets de terminaison (132), et
l'élément réseau (150) s'organise pour que l'appel soit configuré avec la station mobile de terminaison (104) via le réseau commuté de circuit de terminaison (142) en recevant une troisième proposition de protocole de description de session associée au réseau commuté de circuit de terminaison (142).

5. Procédé selon la revendication 1, comprenant en outre l'alerte, par la station mobile de terminaison (104), d'un utilisateur de la station mobile de terminaison (104) à l'appel, dans lequel l'alerte comprend la notification à l'utilisateur de la station mobile de terminaison (104) qu'une connexion est établie pendant que l'appel est passé du réseau de données de paquets de terminaison (132) au réseau commuté de circuit de terminaison (142) .

6. Procédé selon la revendication 1, comprenant en outre :
en réponse à la détermination qu'un transfert est souhaitable, le lancement d'un temporisateur (212) par la station mobile de terminaison (104) ; et
la détermination, par la station mobile de terminaison (104), du transfert,
dans lequel la demande est transmise uniquement si la station mobile de terminaison (104) reçoit l'instruction utilisateur avant l'expiration du temporisateur (212).

7. Procédé selon la revendication 1, comprenant en outre :
le transport, par l'élément réseau (150), d'un message d'annulation à la station mobile de terminaison (104) pour annuler une branche de l'appel englobant le réseau de données de paquets de terminaison (132) ; et
en réponse à un défaut de réception par l'élément du réseau (150) d'une réponse au message d'annulation avant l'expiration d'une période d'attente de réponse, la terminaison, par l'élément réseau (150), de la branche.

8. Station mobile (104) capable d'engager des transferts inter-technologie d'un appel depuis un réseau de données de paquets de terminaison (132) vers un réseau commuté de circuit de terminaison(142), la station mobile (104) configurée pour recevoir, via le réseau de données de paquets de terminaison (132), d'une invitation de session pour l'appel, la détermination, avant de répondre à l'invitation de session, qu'un transfert de l'appel est souhaitable, et en réponse à la détermination qu'un transfert est souhaitable et la réception d'instruction utilisateur pour répondre à l'appel, pour ensuite transmettre une demande que l'appel soit configuré via le réseau commuté de circuit de terminaison (142).

9. Station mobile selon la revendication 8, dans laquelle la station mobile (104) est configurée pour alerter un utilisateur de la station mobile de terminaison (104) à l'appel avant de demander que l'appel soit configuré via le réseau commuté de circuit de terminaison (142).

10. Station mobile selon la revendication 8, dans laquelle la station mobile (104) est configurée pour alerter un utilisateur de la station mobile de terminaison (104) à l'appel en notifiant l'utilisateur de la station mobile de terminaison (104) qu'une connexion est établie pendant que l'appel est passé du réseau de données de paquets de terminaison (132) au réseau commuté de circuit de terminaison (142).

11. Station mobile selon la revendication 8, dans laquelle la station mobile (104) est configurée pour démarrer un temporisateur (212) en réponse à la détermination qu'un transfert est souhaitable, et pour ensuite transmettre la demande que l'appel soit configuré via le réseau commuté de circuit de terminaison uniquement si la station mobile (104) reçoit l'instruction utilisateur avant l'expiration du temporisateur (212).

12. Système comprenant :
la station mobile selon la revendication 8 ; et
un élément réseau (150) configuré pour recevoir une première invitation de session à partir d'une station mobile d'origine (102), la transmission d'une deuxième invitation de session à la station mobile (104) via un réseau de données de paquets de terminaison (132), la réception d'une demande de la station mobile (104) pour configurer l'appel via un réseau commuté de terminaison (142) avant l'établissement de l'appel, et ensuite l'organisation de la configuration de l'appel avec la station mobile (104) via le réseau commuté de circuit de terminaison (142).

13. Système selon la revendication 12, dans lequel la première invitation de session comprend un premier identifiant de connexion (CID:1) associé à la station mobile d'origine (102), dans lequel la deuxième invitation de session comprend un deuxième identifiant de connexion (CID:2) associé à une connexion avec la station mobile (104), via un réseau de données de paquets de terminaison (132), et dans lequel l'élément réseau (150) est configuré pour organiser la configuration de l'appel avec la station mobile (104) via le réseau commuté de circuit de terminaison (142) en annulant le deuxième identifiant de connexion (CID:2) après l'attribution d'un troisième identifiant de connexion (CID:3) à une connexion avec la station mobile (104) via le réseau commuté de circuit de terminaison (142).

14. Système selon la revendication 12, dans lequel la première invitation de session comprend une première proposition de protocole de description de session (SDP_1) associée à une station mobile d'origine (102), dans lequel la deuxième invitation de session comprend une deuxième proposition de protocole de description de session (SDP_2) à la station mobile (104) via le réseau de données de paquets de terminaison (132), et dans lequel l'élément réseau (150) est configuré pour organiser la configuration de l'appel avec la station mobile (104) via le réseau commuté de circuit de terminaison (142) en recevant une troisième proposition de protocole de description de session (SDP_3) associée au réseau commuté de circuit de terminaison (142).

15. Système selon la revendication 12, dans lequel l'élément réseau (150) est un ou plusieurs d'un gestionnaire de mobilité et d'un serveur de continuité d'appel vocal (156).

16. Système selon la revendication 12, dans lequel l'élément de réseau (150) est configuré pour transmettre un message d'annulation pour annuler une branche de l'appel englobant le réseau de données de paquets de terminaison (132) et, en réponse à un défaut de réception d'une réponse au message d'annulation avant l'expiration d'une période d'attente de réponse, la terminaison de la branche.
